# EUROPEAN PATENT APPLICATION

(11) **EP 4 190 462 A1**
(43) Date of publication of application: **07.06.2023**
(21) Application number: 21212339.2
(22) Date of filing: 03.12.2021
(51) Int. Cl.: B22D 17/32, B29C 39/44, B29C 45/76

(54) **METHOD AND EVALUATION COMPONENT FOR MONITORING A DIE CASTING OR INJECTION MOLDING PRODUCTION PROCESS OF A MECHANICAL COMPONENT WITH AN ACCORDING PRODUCTION MACHINE**

(71) Applicant: Siemens Aktiengesellschaft, 80333 München (DE)
(72) Inventor: Kaul, Shehjar, 90439 Nuremberg (DE); Anicet Zanini, Rafael, 90471 Nürnberg (DE); Jorge Favaro, Marcelo, 90409 Nürnberg (DE); Athanasiou, Georgia, 90491 Nürnberg (DE)
(74) Representative: Siemens Patent Attorneys

(57) **Abstract**

The present invention describes a method for monitoring a die casting or injection molding production process of a mechanical component with a die casting or injection molding production machine (100),
• wherein the die casting or injection molding process comprises a first process element taken from the following group of process elements: cooling, core-process, injection, lubrication, electric power, and tie-bar strain,
• wherein sensor values and/or control values of the die casting or injection molding production machine (100) are recorded during the die casting or injection molding production process of the mechanical component,
• wherein the recorded sensor values comprise a first selection of sensor values being assigned to the first process element and/or the control values comprise a first selection of control values being assigned to the first process element,
• and wherein the sensor values and/or the control values are evaluated by an evaluation component (188, 500, 720),
whereas the method is further designed and set up,
• that the evaluation component (188, 500, 720) comprises an ML-model (502) set up by means of a machine learning method, and
• that the evaluation component (188, 500, 720), and/or the ML-model (502), outputs a warning message, if an evaluation of the sensor values and/or the control values by the evaluation component (188, 500, 720) results in an increased probability for a defect or anomaly of the mechanical component produced or the die casting or the injection molding production machine,
• that the ML-Model (502) comprises a first ML-Model-component (810, 820, 830),
• and that the evaluation of the sensor values and/or the control values by the evaluation component (188, 500, 720) comprise a first evaluation step for creating a first evaluation result using the first ML-Model-component (810, 820, 830), whereas the first evaluation result is based on the first selection of sensor values and/or the first selection of control values.

## Description

The present invention consists of a method and evaluation component for monitoring a die casting or injection molding production process of a mechanical component with an according production machine,
wherein at least one sensor value and/or at least one control value of the production machine is recorded during the die casting or injection molding production process of the mechanical component, and
wherein the sensor values and/or the control values are evaluated by an evaluation component.

Such methods are known from prior art. The patent US 10,203,666 B2 discloses e.g. a cell controller including an inside information acquiring unit for acquiring the inside information of a plurality of manufacturing machines, and an inside information comparing unit which compares, with regard to a first manufacturing machine and a second manufacturing machine, which are selected by the comparison object selecting unit, first inside information and second inside information, and the inside information comparing unit extracting a difference therebetween. The cell controller also includes an abnormality cause finding unit for finding a cause of an abnormality that occurs in the first manufacturing machine or the second manufacturing machine, based on the difference, and an abnormality cause conveying unit for conveying the cause of the abnormality to the outside of the cell controller. This patent further discloses a learning instrument for performing machine learning using information stored in a database, acquired inside information of each of the manufacturing machines and device configuration information in order to update the information in this database. This learning instrument learns a combination of the state of the abnormality which has occurred in each manufacturing machine with a cause of the occurrence of the abnormality. The learning is done in a way, that the learning instrument performs machine learning when the information of the database is automatically updated. The result of this machine learning process helps to improve the information of the database by reflecting the correspondence relationship between an abnormality of a manufacturing machine and a cause of the abnormality.

It is a disadvantage of the prior art, that only the database, which comprises information about the cause of the occurrence of an abnormality, is updated. The task of really detecting abnormalities, identifying the cause of such abnormality and removing this cause, is left to a person handling an according technical system.

Therefore, it is a task of the present invention, to make the handling of abnormalities occurring during a production process or caused by a production process better and/or easier.

This task is solved by a method with the features of claim 1.

This Method is designed and set up for monitoring a die casting or injection molding production process of a mechanical component with a die casting or injection molding production machine, wherein the die casting or injection molding process comprises a first process element taken from the following group of process elements: cooling, core-process, injection, lubrication, electric power, and tie-bar strain.

Further, sensor values and/or control values of the die casting or injection molding production machine are recorded during the die casting or injection molding production process of the mechanical component, wherein the recorded sensor values comprise a first selection of sensor values being assigned to the first process element and/or the control values comprise a first selection of control values being assigned to the first process element.

The sensor values and/or the control values are evaluated by an evaluation component, whereas the evaluation component comprises an ML-model set up by means of a machine learning method, whereas the evaluation component and/or the ML-model, outputs a warning message, if an evaluation of the sensor values and/or the control values by the evaluation component results in an increased probability for a defect or anomaly of the mechanical component produced or the die casting or the injection molding production machine.

The ML-Model further comprises a first ML-Model-component and the evaluation of the sensor values and/or the control values by the evaluation component comprise a first evaluation step for creating a first evaluation result using the first ML-Model-component, whereas the first evaluation result is based on the first selection of sensor values and/or the first selection of control values.

The task named above is also solved by a method being designed and set up for monitoring a die casting or injection molding production process of a mechanical component with a die casting or injection molding production machine, wherein sensor values and/or control values of the die casting or injection molding production machine are recorded during the die casting or injection molding production process of the mechanical component.

The sensor values and/or the control values are evaluated by an evaluation component, whereas the evaluation component comprises an ML-model set up by means of a machine learning method. The evaluation component, and/or the ML-model, outputs a warning message if an evaluation of the sensor values and/or the control values by the evaluation component results in an increased probability for a defect or anomaly of the mechanical component produced.

In a preferred embodiment, the evaluation component, and/or the ML-model, outputs a warning message, if an evaluation of the sensor values and/or the control values by the evaluation component using the ML model results in an increased probability for a defect or anomaly of the mechanical component produced or the die casting or injection molding production machine.

The method can, for example, be designed and set up in a way that only sensor values of sensors, which are already present in the die casting or injection molding production machine, are used. Control values can also be obtained, for example, from control components of the die casting or injection molding production machine, which are provided anyway in the die casting or injection molding production machine.

By using an ML-model with the evaluation component, it is easier to adapt the system to sensors used in the die casting or injection molding production machine, because by accordingly training or setting up such ML model, the special reasons or sensor values leading to a disturbance or an anomaly are directly taken into account by using the ML-model. Therefore, using such method makes the handling of abnormalities occurring during a production process, or caused by a production process, easier.

In an advantageous embodiment, it may be provided that the at least one sensor value and/or at least one control value is recorded during a production process of a mechanical part by the die casting or injection molding production machine. The production process may include, for example, the steps: Loading the raw material into the die casting or injection molding production machine, producing the mechanical part, and removing the mechanical part from the die casting or injection molding production machine.

Furthermore, the at least one sensor value and/or at least one control value can be recorded in the context of a downtime, a preparation time and/or a post-processing time of the die casting or injection molding production machine. The downtime of the die casting or injection molding production machine may be designed and set up, for example, as a time in which no mechanical part is produced in the die casting or injection molding production machine. A preparation time may, for example, be designed and set up in such a way that during this time the die casting or injection molding production machine is prepared for producing a mechanical part (e.g., by lubricating the die or form). A follow-up period may be designed and set up in such a way that in this time a transition of the die casting or injection molding production machine from producing a mechanical part to a downtime or to the production of another mechanical part takes place.

It may also be provided that the at least one sensor value and/or at least one control value is recorded in the context of a separate analysis sequence of the die casting or injection molding production machine. In this case, the analysis sequence can be designed and set up in such a way that one can detect anomalies or defects of the die casting or injection molding production machine or parts thereof by an evaluation of at least one sensor value or at least one control variable by the evaluation component, e.g., by using the ML-model.

A production machine for performing a die casting process can, for example, be designed and set up as a die casting machine or die casting plant or a machine or plant comprising such functionality. A production machine for performing an injection molding process can, for example, be designed and set up as an injection molding machine or injection molding plant or a machine or plant comprising such functionality.

In general, die casting is a manufacturing process in which, in most cases, molten metal is poured or forced into steel molds. The molds - also known as tools or dies - are often created using steel and are specially designed for each project or mechanical part to be produced. This allows each component to be created with accuracy and repeatability. Aluminum, zinc, and magnesium are the most commonly used die casting alloys.

Injection molding is a method to obtain molded products by injecting plastic materials molten by heat into a mold, and then cooling and solidifying them. The method is suitable for the mass production of products with complicated shapes, and takes a large part in the area of plastic processing.

The processes of injection molding and die casting are very similar and can in general be divided into the following six major steps:
1. Preparation (e.g. Lubrication)
1. Clamping of the molds or dies
2. Injection of the metal or plastic material
3. Dwelling / Core Process
4. Cooling
5. Mold opening
6. Removal of products

A die casting or injection molding machine is typically divided into 2 units i.e. a clamping unit and an injection unit. The functions of the clamping unit are opening and closing a die or mold, and the ejection of products. The function of the injection unit is basically to inject molten metal or plastic into such die or mold. Depending on the machine type also the melting of the metal or plastic can be performed by the injection unit.

While molten metal or plastic is injected in a mold, the machine controls the injection speed. On the other hand, it controls dwell pressure after molten metal or plastic fills out cavities. The position of change from speed control to pressure control is e.g. set at the point where e.g. the injection pressure reaches a certain fixed value.

The at least one sensor value can be, for example, a digital or analog value supplied by a sensor. For example, the value can be supplied directly by the sensor or after appropriate (pre-)processing or digital-to-analog conversion or analog-to-digital conversion. Sensors can be any type of sensors, such as temperature sensors, pressure sensors, flow sensors, level sensors, speed sensors, counters, acceleration sensors or comparable sensors. Furthermore, a sensor can also be designed and set up as a so-called software sensor or virtual sensor.

The at least one sensor value can be, for example, a value of a sensor, which was recorded at a certain time, for example in the context of a production process of one or more mechanical components or a special analysis procedure. Furthermore, the at least one sensor value may be designed and set up as several sensor values, wherein each of the several sensor values may originate from a different sensor and e.g. was recorded at a certain, for example predetermined or predetermined time, e.g. in the context of a production process of one or more mechanical components or of a special analysis procedure.

Furthermore, the at least one sensor value may be formed and set up as one or more time series of values of one or more sensors, wherein, for example, a time series of sensor values may be recorded with regular time intervals, or at certain, fixed times with e.g. different time intervals.

The at least one sensor value can also contain combinations of values according to the present description - e.g. of one or more sensors according to the present description.

The control value of the die casting or injection molding production machine may be, for example, an analog or digital value, a command, a sequence of commands or even a message, which is sent, for example, by a control device e.g. to an actuator or another control device of the die casting or injection molding production machine. The control device may, for example, be part of the die casting or injection molding production machine or be located separate from the die casting or injection molding production machine. An actuator may be, for example, a motor, a drive, a regulator, a valve, a display device, a pump, a valve actuator, or a comparable device.

A control device may be, for example, a computer, a programmable logic controller, a modular programmable logic controller, a controller, a microcontroller, an EDGE-device, a distributed peripheral device, or a comparable device.

The transmission of the analog or digital value or command from the control device to the actuator or a further control device of the die casting or injection molding production machine, can be performed via a single-wire line, a two-wire line, a fieldbus, a WiFi-connection or a comparable wired or wireless communication link.

In general, a control device can be any type of computer or computer system, which is e.g. designed and set up to control a plant, an apparatus and/or a device. The controller can also be a computer, a computer system or a so-called "cloud" on which a control software or a control software application, for example a control application or control app, is respectively implemented or installed. Such a control application or control app can be designed and set up e.g. as an application with the functionality of a programmable logic controller.

The control device may also be designed and set up as a so-called edge device, wherein such an edge device may include, for example, an application for controlling devices or systems, e.g. a control application or control app as named above. For example, such an application can be designed and set up as an application with the functionality of a programmable logic controller. The edge device may be connected, for example, to a further control device, or directly to a device or system to be controlled. Furthermore, the edge device can be designed and set up in such a way that it is additionally connected to a data network or a cloud or is designed and set up to connect to a corresponding data network or a corresponding cloud.

The control device can, for example, also be designed and set up as a so-called programmable logic controller (PLC). Furthermore, the control device can also be set up and designed as a so-called modular programmable logic controller (modular PLC) .

A programmable logic controller, or PLC for short, is a component that is programmed and used to regulate or control a plant or machine. In a PLC specific functions, such as a sequence control, can be implemented to handle the input and output signals of processes or machines. For example, the programmable logic controller is at least partially defined in the EN 61131 standard or the IEC 61131 standard.

In order to connect a programmable logic controller to a system or machine, actuators, which are usually connected to outputs of the PLC, as well as sensors, which are usually connected to inputs of the PLC, are used. Sensors include, for example: light barriers, switches, buttons, incremental encoders, level sensors, temperature sensors and pressure sensors. Actuators include e.g.: inverters or switches for electric motors, electric valves for compressed air or hydraulics, drive control modules, motors and/or all kind of drives and comparable actuators.

The realization of a PLC can be done in different ways. That means, it can be realized as an electronic single device, as a software emulation, as a PC plug-in card etc.. Modular solutions, in which the PLC is assembled from several plug-in modules, are also frequently found.

The evaluation component can be any computer device which has sufficient memory and computing capacity to take over the storage, operation and/or handling of the corresponding ML model. In particular, the evaluation component may be, for example, a corresponding control device, a corresponding controller, a programmable logic controller, a modular programmable logic controller or a comparable device. Furthermore, the evaluation component can be designed and set up, for example, as a so-called edge device. The evaluation component can also be a computer hardware, a computer or a part of a computing network. In such embodiments the evaluation component can be e.g. realized as a software application in such computer hardware, cloud or computer network.

An evaluation component can, for example, also be designed and set up as a virtual evaluation component instance, which e.g. runs or can run on a corresponding hardware, a corresponding computer network or a cloud. The functionality of the evaluation component is then generated by running the virtual evaluation component instance.

For example, the evaluation component can be part of a control device or a control computer for the die casting or injection molding production machine or included in the die casting or injection molding production machine.

The evaluation component may also be composed of several sub-components. These can, for example, be communicatively coupled. Each of the sub-components can then in turn be designed and set up in accordance with one or more of the examples for an evaluation component explained above.

The evaluation component may further be designed and set up in such a way that the at least one sensor value evaluated by it and/or the at least one control value evaluated by it is directly or indirectly fed to the ML-model, in particular fed into the ML-model as an input variable.

Furthermore, the evaluation component may be designed and set up for processing or further processing of at least one sensor value and/or at least one control value. Such processing or further processing may be, for example, a normalization, conversion, transformation, reformatting, translation and/or another comparable processing step, or may include such processing steps.

In this case, the evaluation component may be designed and set up in such a way that after processing or further processing of at least one sensor value and/or at least one control value, one or more results of such processing or further processing are fed to the ML model, in particular fed into the ML model as one or more input values.

The evaluation component may further comprise a simulation environment, which is designed and set up for running a simulation program for the simulation of the die casting or injection molding production machine - or for the simulation of parts or components of the die casting or injection molding production machine. The evaluation component may also include a simulation environment with a simulation program for the simulation of the die casting or injection molding production machine or for the simulation of one or more parts or components of the die casting or injection molding production machine.

Simulated parts or components of the die casting or injection molding production machine may be, for example, device parts being involved in the injection process, namely taking part in the supply of liquid metal or plastic to a die or mold. Furthermore, a simulated part of the die casting or injection molding production machine may also be components and parts being involved in the creation of the mechanical component inside the die or mold. Such components or parts may comprise the parts of the die or mold, temperature-, force-, position, pressure- and other sensors involved, parts involved in cooling the die or mold, or the mechanical part under production.

Said processing or further processing of the at least one sensor value and/or the at least one control value by the evaluation component may be designed and set up as a use of at least one sensor value or at least one control value as input data for a simulation program according to the present description running in a simulation environment according to the present description.

One or more results of such a processing or further processing of the at least one sensor value and/or the at least one control value can then be, for example, one or more values generated while running the simulation program. Such result or results can then be used as input of the ML-model. Such one or more values generated while running the simulation program can be, for example, output values of so-called "virtual sensors" being simulated by the simulation (often also referred to as so-called "soft sensors"). Examples of such a soft sensor or virtual sensor are, for example, a virtual pressure sensor, a virtual steam sensor, a virtual temperature sensor and/or a virtual sensor for measuring a material or energy flow.

The said simulation may, for example, be designed and set up in such a way that it runs parallel to a production process for a mechanical component taking place in the die casting or injection molding production machine, or parts of such a production process.

Furthermore, it may be provided that the at least one sensor value supplied to the evaluation component and/or the at least one control value supplied to the evaluation component is used as an input variable for a simulation - e.g. a simulation according to the present description.

Furthermore, one or more values generated by a simulation, in particular a simulation according to the present description, may be used as input variable for the ML model. For example, one or more so-called "soft sensors" may be defined within such a simulation and then corresponding soft sensor values can be calculated and output as part of the simulation process. Such soft sensor values of one or more such soft sensors may also be used as input variables for the ML-model. Examples for such a soft sensor may be, for example, a virtual pressure sensor, a virtual steam sensor, a virtual temperature sensor and/or a virtual sensor for measuring a material or energy flow.

In this way, a further advantageous embodiment is achieved, because by the use of such virtual sensors a large number of sensors can be generated and used, e.g. as an input for the ML-model, without the construction or setup of the die casting or injection molding production machine having to be changed.

A machine learning method is, for example, an automated ("machine") method which does not generate results by means of predefined rules, but in which regularities are identified from many examples (usually automatically) by means of a machine learning algorithm or learning method. Based on that, information about the data to be analyzed is then generated.

Such machine learning methods can be designed and set up, for example, as a supervised learning method, a partially supervised learning method, an unsupervised learning method or also a reinforcement learning method.

Examples of machine learning methods are, for example, regression algorithms (e.g. linear regression algorithms), the generation or optimization of decision trees, learning methods for neural networks, clustering methods (e.g. a so-called "k-means-clustering"), learning methods for or generation of support vector machines (SVM), learning methods for or generation of sequential decision models or learning methods for or generation of Bayesian models or networks.

The result of an application of such a machine learning algorithm or learning procedure to certain data is referred to, in particular in the present description, as a "machine learning" model or ML-model. Such ML-model thereby represents the digitally stored or storable result of the application of the machine learning algorithm or learning method to the data to be analyzed.

In this context, the generation of the ML-model may be designed and arranged such that the ML-model is newly formed by the application of the machine learning method to specific data. Alternatively, a ML-model may be generated by applying data to an already existing ML-model, which then is modified or adapted by the application of the machine learning method.

Examples of such ML-models are results of regression algorithms (e.g., a linear regression algorithm), neural networks, decision trees, the results of clustering methods (including, e.g., the obtained clusters or cluster categories, cluster definitions and/or cluster parameters), support vector machines, sequential decision models or Bayesian models or networks.

Neural networks can be e.g. so-called "Deep Neural Networks", "Feed Forward Neural Networks", "Recurrent Neural Networks"; "Convolutional Neural Networks" or "Autoencoder Neural Networks". In this context, the application of appropriate machine learning methods to neural networks is often also referred to as "training" the corresponding neural network.

Decision trees can, for example, be designed and set up as so-called "iterative dichotomizers 3" (ID3), classification or regression trees (CART) or also so-called "random forests" .

A neural network, at least in the context of the present description, is understood to be a setup comprising a network of so-called nodes, where each node is usually connected to several other nodes. The nodes are also referred to, for example, as artificial neurons. In this context, each node has at least one input and one output connection. Input nodes for a neural network are those nodes that can receive signals (data, stimuli, patterns, or the like) from the outside world. Output nodes for a neural network are those nodes which can pass on signals, data or the like to the outside world. So-called "hidden nodes" are those nodes of a neural network which are neither input nor output nodes.

For example, the neural network can be a so-called deep neural network (DNN). Such a deep neural network is a neural network in which the network nodes are arranged in layers (whereby the layers themselves can be one-dimensional, two-dimensional or even higher-dimensional). A deep neural network includes at least one or two so-called hidden layers, which only include nodes that are not input nodes or output nodes. That is, the hidden layers have no connections to input signals or output signals.

In this context, a so-called "deep learning" is understood to be, for example, a class of machine learning techniques that exploit many layers of nonlinear information processing for supervised or unsupervised feature extraction and transformation, and for pattern analysis and classification. In the context of such "deep learning", a so-called "deep neural network", e.g. according to the present description, is generally used in this context.

The neural network can also have, for example, a so-called autoencoder structure, which will be explained in more detail otherwhere in the present description. Such an autoencoder structure may be suitable, for example, for reducing a dimensionality of the data and thus, for example, identifying similarities and commonalities.

A neural network can also be designed, for example, as a so-called classification network, which is particularly suitable for classifying data into categories. Such classification networks are used, for example, in connection with handwriting recognition.

Another possible structure of a neural network can be, for example, the design as a so-called "Deep-Believe-Network".

A neural network may also have, for example, a combination of several of the aforementioned structures. For example, the neural network architecture may include an autoencoder structure to reduce the dimensionality of the input data. Such autoencoder structure may further be combined with another network structure to, for example, detect peculiarities and/or anomalies within data of such reduced dimensionality or to classify data of such reduced dimensionality.

The values describing the individual nodes and their connections including further values describing a particular neural network may, for example, be stored as a value set describing the neural network. Such a value set then represents, for example, an embodiment of the neural network. If such a value set is stored after a training of the neural network, then, for example, an embodiment of a trained neural network is stored therewith. Thus, it is possible, for example, to train the neural network with corresponding training data in a first computer system, then to store the corresponding value set which is assigned to this trained neural network, and then to transfer it as a configuration of the trained neural network to a second system - to apply the trained neural network there, for example.

A neural network can usually be trained by determining parameter values for the individual nodes or for their connections via various known learning methods by inputting input data into the neural network and analyzing the corresponding output data from the neural network. In this way, a neural network can be trained with known data, patterns, stimuli or signals using methods known in prior art. The network trained in this way can then be used subsequently, for example, to analyze further data.

In general, the training of a neural network is understood to be a method to calculate or change so-called bias values, weight values and/or transfer functions of the individual nodes of the neural network, or of the connections between two nodes, by applying one or more training algorithms on according training data and the neural network to be trained.

For the training of a neural network, e.g. according to the present description, for example one of the methods of the so-called "supervised learning" can be used. In this case, a network is trained with data to which results, capabilities or other information has been assigned (so called "labeled data"). Which such supervised learning, a neural network can learn to assign such results, capabilities, or other information to newly incoming data.

Furthermore, a method of so-called "unsupervised learning" can be used to train the neural network. Such an algorithm generates for a given set of inputs, for example, a model that describes the inputs and enables predictions to be made from them. There are, for example, clustering methods that can be used to divide the data into different categories if, for example, they differ from each other by characteristic patterns. Usually so called "unlabeled data" is used for performing such unsupervised learning.

When training a neural network, supervised and unsupervised learning methods can also be combined, for example if parts of the data are assigned trainable properties or abilities, while this is not the case for another part of the data.

Furthermore, reinforcement learning methods can be used for training the neural network, at least among other things.

Training, which requires a relatively high computing power of a corresponding computer, can be e.g. performed on a high performance system, while using the trained neural network later on can then be done on a lower performance system. Such usage of the trained neural network may, for example, be performed on an assistance system and/or on a control device, a programmable logic controller or a modular programmable logic controller or further corresponding devices according to the present description, e.g. an evaluation component.

A defect is understood, especially in the context of the present description, to be any faulty functionality, form, look or structure of a device or product - in this case the die casting or injection molding production machine or a mechanical component produced therewith. In particular, a defect of the die casting or injection molding production machine is considered to be such a faulty functionality, which results e.g. in a faulty mechanical components produced therewith, often by wear or also damage to the die casting or injection molding production machine or its components.

In the context of the present description, an anomaly is understood to mean, for example, that a corresponding device, equipment, or product does not look or behave as intended. In this context, the presence of an anomaly of the die casting or injection molding production machine does not necessarily have to lead to defects in a mechanical component produced, in this case, for example, a product manufactured by the die casting or injection molding production machine, but can, for example, be a behavior of the device or the equipment which was not intended in this way when the device or the equipment was set up and planned. Anomalies of a mechanical component might be differences in form, look, properties and/or structure of mechanical component compared to the component, which was planned to be produced - which such differences being within tolerances defined for the component or such differences not disturbing the functionality of the component, at least if such differences do not disturb the basic functionality of the component.

That the evaluation of the sensor values and/or the control values by the evaluation component results in an increased probability for a defect or anomaly of the mechanical component produced can be designed and set up in a way, that a predefined probability can be used or set as "increased probability". Such increased probability can be 0.01%, 0.1%, 1%, 10% or 50% or even higher than 50% or lower than 0.01%. The products produced in a production process leading to a warning message might then be additionally tested by other quality testing methods. By implementing a method according to the present description, it might be possible to generally reduce the testing rate of products for such products, for which no warning message has been output by the evaluation compound. This reduces cost and/or efforts for the production of such products in general.

The warning message can, for example, provide information about a possible anomaly as well as a possible defect and/or malfunction. Furthermore, the warning message may also include information about possible causes of the possible defect and/or the possible anomaly as well as ways to determine such causes. Furthermore, such a warning message may also inelude information about the person responsible for appropriate maintenance or elimination of the causes of possible defects, or e.g. a corresponding group of persons or a corresponding service facility with appropriate contact details such as addresses, telephone numbers, e-mail addresses, etc.

A process for outputting a warning message by the evaluation component - or triggered by the evaluation component - if an evaluation of the sensor values and/or the control values by the evaluation component results in an increased probability for a defect or anomaly of the mechanical component produced, may be designed and set up as explained below.

In the case of the embodiment of the ML-model as a neural network, the evaluation component might be set up in a way that after entering at least one sensor value and/or at least one control value into the neural network, a corresponding information from the neural network is output, which indicates or triggers the output of a corresponding warning message.

The neural network may have been trained, for example, with a method of supervised learning with corresponding sensor values and/or control values and known states of the die casting or injection molding production machine. This is explained in more detail in the description below. In this case, the evaluation component may be designed and set up in such a way that the neural network outputs information from the neural network, for example through a corresponding output node layer of the neural network, by which the output of a corresponding warning message is triggered or indicated.

Furthermore, the neural network may also have been trained with methods of unsupervised learning with corresponding sensor values and/or control values. This, too, will be explained in more detail below. If, for example, a neural network with a so called autoencoder structures is used, it may be provided, for example, that the output of a corresponding warning message is triggered on the basis of changes in a so-called code-node layer of the auto-encoder (as explained in more detail in the following text).

In a preferred embodiment, the method can be designed and set up in a way, that the sensor values and/or control values considered when doing the evaluation whether to output a warning message or not, are sensor values and/or control values recorded during the production of a specific mechanical component. In this way, for example a quality control or trigger for further testing the special mechanical component can be initiated by the warning message.

In the same way, for example for training and ML-model according to the present description, also a set of sensor values and/or control values can be used, which has been recorded during the production of a specific mechanical component. Such set of sensor values and/or control values can be later on used for example in the course of using supervised learning methods according to the present description to train ML-models according to the present description, by assigning according properties of this specific mechanical component produced to such set of sensor values and/or control values (also named as "labeling these sensor values and/or control values with the according properties of this specific mechanical component produced"). Such set of sensor values and/or control values can be later used for example in the course of using supervised learning methods according to the present description to train ML-models according to the present description.

When using further embodiments for the ML-model, as explained in more detail in the following text, the process for outputting a warning message using the ML-model can be implemented in a comparable way.

In a further embodiment, the die casting or injection molding process can comprise a first process element taken from the following group of process elements: cooling, core-process, injection, lubrication, electric power and tie-bar strain and the ML-Model can comprise a first ML-Model-component.

In this case, the sensor values can comprise a first selection of sensor values being assigned to the first process element and/or the control values comprise a first selection of control values being assigned to the first process element.

The evaluation of the sensor values and/or the control values by the evaluation component can then comprise a first evaluation step for creating a first evaluation result using the first ML-Model-component, whereas the first evaluation result is based on the first selection of sensor values and/or the first selection of control values.

The output of the warning message by the evaluation component can then be based on the first evaluation result. That the output of the warning message is based on the first evaluation result can e.g. be set up in a way that the decision for outputting the warning message is based on the first evaluation result and/or the content of the warning message is based on the first evaluation result.

In an alternative embodiment, the output of the warning message can also be based on the first evaluation result and additional input. Such additional input can for example be from other sensors or virtual sensors or other parts of the evaluation component or other evaluation components or devices.

This embodiment makes the handling of abnormalities occurring during a production process or caused by a production process still easier, since the setup of an evaluation performed by an ML-model being specifically tuned to a special process element is easier to perform.

A process element can be each logical part, segment or task of a process for producing a component, especially a mechanical component. Different process elements can follow each other in time or can be performed at least partly in parallel.

Examples for such process elements are a cooling process element, a core-process process element, an injection process element, a lubrication process element, an electric power process element and/or a tie-bar strain process element.

The "cooling" process element might comprise all kind of processes regarding the cooling of a die or form. Such processes might be e.g. a cooling after a molten metal or plastic has been injected into the die or form, or cooling processes of other elements of the injection molding production machine. This cooling can be performed for example with liquids, like e.g. water, and/or gases, like e.g. air.

Following sensors of the die casting or injection molding production machine might be assigned to the "cooling" process element: a first die or form part cooling water volume sensor, a second die or form part cooling water volume sensor, an injection sleeve cooling water volume sensor, a first die or form part cooling water temperature sensor, a second die or form part cooling water temperature sensor and/or an injection sleeve cooling water temperature sensor.

A selection of sensor values being assigned a "cooling" process element could comprise one or more sensor values from one or more of the sensors being assigned to a "cooling" process element, e.g. one of the sensors named above. Such sensor values could comprise e.g. a single value measured at a specific time or one or more time series of values delivered by one or more of the sensors. Such time series could be e.g. volume flow rate values measured by a cooling water volume sensor measured at 1 sec interval for 60 seconds after a start or an end of an injection process. Such time series could also be e.g. temperature values measured by a cooling water temperature sensor measured at 1 sec interval for 60 seconds after a start or an end of an injection process.

The "injection" process element might comprise all kind of processes regarding injection of a liquid metal or plastic into a die or form. Such processes might be or comprise e.g. performing a so called "shot wave" to inject such liquid metal or plastic into the die or form.

Following sensors of the die casting or injection molding production machine might be assigned to the "injection" process element: a velocity sensor to detect a velocity of the injected liquid metal or plastic or an according hydraulic cylinder, rod or plunger, a pressure sensor to measure a pressure applied to the liquid metal or plastic during injection, e.g. by a hydraulic cylinder, rod or plunger, a stroke sensor to measure the stroke e.g. of a hydraulic cylinder or plunger pressing the liquid metal or plastic into the die or form and/or a temperature sensor for measuring the temperature of the liquid metal or plastic.

A selection of sensor values being assigned a "injection" process element could comprise one or more sensor values from one or more of the sensors being assigned to a "injection" process element, e.g. one of the sensors named above. Such sensor values could comprise e.g. a single value measured at a specific time or one or more time series of values delivered by one or more of the sensors. Such time series could be e.g. piston stroke values, velocities of an injection hydraulic cylinder, rod or plunger and/or liquid metal or plastic pressure measured by respective sensors at 2 Milliseconds time interval for 7 seconds after a start of an injection process element.

The "core-process" process element might comprise all kind of processes regarding processing a metal or inside a die or form. The metal and/or plastic can be liquid, partly liquid and/or already solidified during such core-process. Such processes might be or comprise e.g. performing a so called "squeeze wave" to put additional pressure on the liquid metal or plastic inside the die or form to e.g. reduce a porosity of the material and/or improve mechanical properties or the correctness of shape of the according mechanical component.

Following sensors of the die casting or injection molding production machine might be assigned to the "core-process" process element: a pressure sensor to measure a pressure applied to the liquid metal or plastic, e.g. by a hydraulic cylinder, rod or plunger and/or a stroke sensor to measure the stroke e.g. of a hydraulic cylinder or plunger while exerting pressure on the liquid metal or plastic inside the die or form.

A selection of sensor values being assigned a "core-process" process element could comprise one or more sensor values from one or more of the sensors being assigned to a "core-process" process element, e.g. one of the sensors named above. Such sensor values could comprise e.g. a single value measured at a specific time or one or more time series of values delivered by one or more of the sensors. Such time series could be e.g. according piston stroke values and/or piston pressure values measured by respective sensors at 20 milliseconds interval for 30 seconds after a start or an end of an injection process element.

The "lubrication" process element might comprise all kind of processes regarding lubrication of the die or form e.g. before the liquid metal or plastic is injected into the die or form. Lubrication can be performed e.g. by spraying a liquid lubricant e.g. at least onto the surface inside the die or form coming into contact with the liquid metal or plastic.

Following sensors of the die casting or injection molding production machine might be assigned to the "lubrication" process element: a first volume sensor for detecting a lubricant volume applied to a first part of the die or form, a second volume sensor for detecting a lubricant volume applied to a second part of the die or form and/or a chemical sensor to measure an according lubrication concentration.

A selection of sensor values being assigned a "lubrication" process element could comprise one or more sensor values from one or more of the sensors being assigned to a "lubrication" process element, e.g. one of the sensors named above. Such sensor values could comprise e.g. a single value measured at a specific time or one or more time series of values delivered by one or more of the sensors. Such sensor values could comprise a lubrication volume used during a lubrication process element. Such time series could be e.g. according lubrication volume flow rates at different times.

The "electric power" process element might comprise all processes within a die casting or injection molding production process that are linked to the supply of electrical energy to one or more components of the die casting or injection molding system.

Following sensors of the die casting or injection molding production machine might be assigned to the "electric power" process element: a current sensor to measure an electric current provided to one, multiple or all components of the die casting or injection molding production machine, a voltage sensor to measure an electric voltage applied to one, multiple or all components of the die casting or injection molding production machine and/or a power sensor to measure an electric power applied to one, multiple or all components of the die casting or injection molding production machine.

A selection of sensor values being assigned a "electric power" process element could comprise one or more sensor values from one or more of the sensors being assigned to an "electric power" process element, e.g. one of the sensors named above. Such sensor values could comprise e.g. a single value measured at a specific time or one or more time series of values delivered by one or more of the sensors. Such time series could be e.g. electric power values measured by respective sensors at 100 milliseconds interval for 60 seconds after a start or an end of an injection process element.

The "tie-bar strain" process element might comprise all processes within a die casting or injection molding production process that are linked to the handling of the die or form, e.g. a process combining two or more parts of the die or form together to one complete die or form for performing a die casting or injection molding process, to keep those parts together during such die casting or injection molding process and/or to disintegrate those part for releasing a component produced during such process from the die or form.

Following sensors of the die casting or injection molding production machine might be assigned to the "tie-bar strain" process element: strain sensor to measure a strain of at least one tie-bar holding two or more parts of a die or form together during production of a component by a die casting or injection molding process. Such tie-bar strain is e.g. related at least partly to a pressure of a (e.g. liquid) metal or plastic inside the die or form.

A selection of sensor values being assigned a "tie-bar strain" process element could comprise one or more sensor values from one or more of the sensors being assigned to a "tie-bar strain" process element, e.g. one of the sensors named above. Such sensor values could comprise e.g. a single value measured at a specific time or one or more time series of values delivered by one or more of the sensors. Such time series could be e.g. tie-bar strain values measured by respective sensors at 2 milliseconds interval for 7 seconds after a start or an end of an injection process element.

In a further preferred embodiment, the die casting or injection molding process comprises a second process element taken from the following group of process elements: cooling, core-process, injection, lubrication, electric power and tie-bar strain and the ML-Model comprises a second ML-Model-component and a final-ML-model-component.

In this embodiment, the sensor values comprise a second selection of sensor values being assigned to the second process element and/or the control values comprise a second selection of control values being assigned to the second process element, and the evaluation of the sensor values and/or the control values by the evaluation component comprises a second evaluation step for creating a second evaluation result using the second ML-Model-component, whereas the second evaluation result is based on the second selection of sensor values and/or the second selection of control value. And finally, the evaluation of the sensor values and/or the control values by the evaluation component comprises a final evaluation step for creating a final evaluation result using the final-ML-Model-component, whereas the final evaluation result is based on the first evaluation result and/or the second evaluation result.

In a further preferred embodiment, the first and second process elements are different process elements.

In a second further preferred embodiment, the first and second process elements are the same process element and the first set of sensor values and/or control values and the second set of sensor values and/or control values are assigned to different times during production of a product and/or different production steps and/or different produced products.

A third further preferred embodiment consists of a combination of the first and second preferred embodiments named above.

Sensor values and/or control values being assigned to different times can be set up in a way that the first and second selection of sensor values are assigned to a first and second time span respectively, and that the first and second time span follow each other or overlap.

The first, second and final ML-model-component can e.g. be designed, set-up and trained as presented in the present description for ML-models in general.

The embodiment described before can be seen as a kind of twofold processing of sensor values and/or control values. In a first step, a kind of preprocessing is performed by analyzing sensor values and/or control values assigned to a specific process element with an according ML-model, and sensor values and/or control values assigned to second process element within another according ML-model. In a final evaluation step, the results of these preprocessing steps are then applied to a final ML-model to create a final evaluation result.

The first and second ML-model as well as the final ML-model can be of the same type or structure or can be of different types. In another embodiment, the first and second ML-model can be of the same type, which can be a different type than the final ML-model. In another embodiment, the types of all three ML-models can be different.

The decision about creating a warning message can then be, for example, based on the final evaluation result. In another embodiment, the decision about creating a warning message can be, for example, be based on the first and/or second evaluation result as well as the final evaluation result.

In a further embodiment, the decision about creating a warning message can be based on a further processing of one or more final evaluation results. A post-processing-ML-model can be used for such further processing.

The decision about creating a warning message can e.g. be based on final evaluation results calculated for the same one or more sensors at different times. Or, e.g., for different sensors taken at the same time. Of course, also other combination of measurement-times and sensor values can be used to decide whether to create a warning message or not using the post-processing-ML-model.

Such post-processing-ML-model can e.g. be designed an set up as a so-called long-short-term-memory (LSTM) neural network. A long-short-term-memory (LSTM) neural network is in general an artificial recurrent neural network (RNN) architecture used in the field of deep learning. Unlike standard feedforward neural networks, LSTM neural networks have feedback connections. They can process not only single data points (such as images), but also entire sequences of data (such as time series date, speech or video). For example, LSTM neural networks are applicable to tasks such as handwriting recognition, speech recognition and anomaly detection. LSTM neural networks are especially well-suited to classifying, processing and making predictions based on time series data. LSTMs were developed to deal with the vanishing gradient problem that can be encountered when training traditional RNNs.

Such post-processing-ML-model can also comprise as a Boosted Tree Model or a Gradient Boosted Tree Model. The post-processing-ML-model can also be designed and set up as a Boosted Tree Model or a Gradient Boosted Tree Model. For example, so called "Extreme Gradient Boosting" can be used within the post-processing-ML-model. This can e.g. be realized by using the so called "XGBoost" distributed gradient boosting software library.

All embodiments and explanations described in the present description with respect to the ML-model also apply in a corresponding manner to the first, second and final ML-model, as well as to the post-processing-ML-model. Accordingly, all embodiments and explanations with respect to the recording and/or processing of sensor values and/or control values also apply to the first and second selection of sensor values and control values, respectively.

All embodiments and explanations in the present description regarding a training of the ML-model using the recorded sensor- and/or control-values apply in a corresponding manner also to a training of the first ML-model using the first selection of sensor-values and/or the first selection of control-values, to a training of the second ML-model using the second selection of sensor-values and/or the second selection of control-values as well as to a training of the final ML-model using first evaluation results and/or the second evaluation results. Further, all embodiments and explanations in the present description regarding a training of the ML-model using the recorded sensor- and/or control-values apply in a corresponding manner also to a training of the post-processing-ML-model using final evaluation results.

By these embodiments, differences in characteristics of different process elements can be taken into account, which makes the handling of abnormalities occurring during a production process, or caused by a production process, better and therefore easier.

A method according to the present description can further be designed and set up in a way, that the evaluation component comprises a simulation environment designed and set up for running a simulation program for the simulation of the die casting or injection molding production machine, or for the simulation of parts or components of the die casting or injection molding production machine,
in particular, that the evaluation component comprises a simulation environment comprising a simulation program for simulating the die casting or injection molding production machine, or for simulating parts or components of the die casting or injection molding production machine.

It is an advantage of this embodiment, that additional information for evaluating sensor and/or control values from the die casting or injection molding machine can be provided by a simulation of such machine or parts thereof. And this additional information can be provided without

For examples parameters or properties of such die casting or injection molding machine can be simulated by an according simulation program and then provided to the evaluation component as additional information for the decision, whether to output a warning message or not.

The simulation environment and/or simulation program can for example be designed and set up in a way, that internal properties or fictional measurement values can be calculated or are calculated by such emulation. Such properties of fictional measurement values are sometimes called so-called virtual sensors or soft sensors. Such virtual sensors are soft sensors provide also additional information about the state of the die casting or injection molding machine. Such additional information can then be used as additional information within the evaluation component for deciding, whether to output a warning message on not.

The simulation environment and/or simulation program can further be designed and set up according to the present description.

Therefore, this embodiment further makes the handling of abnormalities occurring during a production process or caused by a production process better and easier.

A simulation environment and/or simulation program can for example be any software environment and/or computer program designed and set up to simulate any electric, mechanical, electromechanical, or other property of any component, part, apparatus, machine and/or plant. A simulation environment can also be any computer component for running an according software performing such task.

The simulation environment and/or simulation program can be designed and set up to run in a separate hardware component being part of the evaluation component. The simulation environment and/or simulation program can also be set up or running on the same hardware as other parts of the evaluation component or on the same hardware as the whole evaluation component.

The method described above can further be designed and set up in a way, that at least one virtual sensor related to the die casting or injection molding production machine, or parts or components thereof, is simulated by running the simulation program. Additionally, the recording of the sensor values of the die casting or injection molding production machine, or parts or components thereof, comprises also the recording of virtual sensor values related to the at least one virtual sensor.

Virtual sensors simulated by running such a simulation program can e.g. be designed and set up according to the present description.

Further, the recording of sensor values according to the present description can also comprise the recording of virtual sensor values created by running a simulation program according to the present description.

The use of such virtual sensor values can be also designed and set up according to the present description.

In a further preferred embodiment, all sensor values of the at least one sensor value, originating from sensors of the die casting or injection molding production machine, are sensor values originating from sensors, which are required or used for a (planned) production process of the mechanical component by the die casting or injection molding production machine.

It is an advantage of this design that for the operation of the evaluation component according to the present description, only sensors are used, which are intended for a corresponding production process of mechanical device with intended quality anyway.

In this way, the apparatus and/or design effort for the realization of a plant monitoring or process control for of a die casting or injection molding production machine is reduced, making it easier to handle abnormalities occurring during a production process or caused by a production process.

A sensor is "required" for a die casting or injection molding production process, if it is required as part of the production process to produce mechanical components of a given quality. Such "required" sensors are not intended exclusively for e.g. predictive maintenance or detection of system defects or wear of the system or components thereof. Furthermore, "required" sensors may also be those sensors, that are not exclusively intended for use with an evaluation component according to the present description.

Sensors are used for an intended production process, when they are used as part of the production process of a mechanical component to produce such mechanical components with a predetermined quality. Such "used" sensors are not intended exclusively for e.g. predictive maintenance or detection of system defects or wear of the system or components thereof. Furthermore, "used" sensors may also be those that are not exclusively intended for use with an evaluation component according to the present description.

That the sensors are required or used for a production process of a mechanical component in the die casting or injection molding production machine may mean, for example, that the corresponding sensors would also be present, if no evaluation component according to the present invention - or a device comparable to such evaluation component - would be provided in the die casting or injection molding production machine.

The die casting or injection molding production machine may also comprise a control device for controlling a production process of a mechanical component by the die casting or injection molding production machine, and
that all control values being recorded during the die casting or injection molding production process of the mechanical component, are control values which are used for a planned production process of the mechanical component by the die casting or injection molding production machine.

Such control device can be designed and set up according to the present description.

By using control values according to the present description for running the die casting or injection molding production machine for performing a process according to the present description, the handling of abnormalities occurring during a production process, or caused by a production process, is made easier. A reason for that is, that such control values are already required for the normal operation of the corresponding die casting or injection molding production machine alone.

The control value for the die casting or injection molding production machine can be any electrical or electronic control value sent from a controller to the die casting or injection molding production machine. In particular, the control value may be any electrical or electronic control variable that is transmitted as part of a production process of a mechanical component by the die casting or injection molding production machine from a controller or a control device to the die casting or injection molding production machine or a component thereof. The control value can be sent in particular, for example, to an actuator of the die casting or injection molding production machine.

An electrical control value can be, for example, an analog signal, a pulse-signal, a voltage level, a signal of a certain frequency or even a modulated signal of a certain frequency or a comparable signal. An electronic control value can also be any type of digital information, such as one or more digital quantities or even a digital message.

In a preferred embodiment, the ML-model has been trained and/or set up at least partly with sensor values originating from virtual sensors according to claim 5 and/or sensors of the die casting or injection molding production machine or other die casting or injection molding production machines. The ML-model could also have been trained at least partly with control values being provided by a control component to any part of the die casting or injection molding production machine or other die casting or injection molding production machines.

In another embodiment, the ML-model comprises a neural network, which has been trained at least partly with sensor values originating from virtual sensors according to the present description and/or sensors of the die casting or injection molding production machine or other die casting or injection molding production machines. The neural network could also have been trained at least partly with control values being provided by a control component to any part of the die casting or injection molding production machine or other die casting or injection molding production machines.

That the ML-model was trained with sensor or control values according to the present description with sensor values or control values originating from other die casting or injection molding production machines, can be designed and set up in a way, that the other die casting or injection molding production machines have a functionality similar to the die casting or injection molding production machine, that the other die casting or injection molding production machines are of the same type than the die casting or injection molding production machine, that the other die casting or injection molding production machines are similar to the die casting or injection molding production machine, that the other die casting or injection molding production machines are of the same model type than the die casting or injection molding production machine or that the other die casting or injection molding production machines are of the exactly same model than the die casting or injection molding production machine.

The other die casting or injection molding production machines can also comprise soft sensors or virtual sensors according to the present description. Such soft or virtual sensors could also have been used for training the ML-model.

The ML-model, the neural network and/or the training of the neural network and ML-model can be designed and set up, for example, according to the present description.

Also, the sensors of the die casting or injection molding production machine and the virtual sensors can be designed and set up according to the present description.

In particular, for example, the training of the neural network can be designed and set up as a so-called "supervised learning". In this case, for example, a so-called deep neural network can be used, and a "deep learning" learning method can be used as a learning method. Training data for the training of the neural network may e.g. be designed and set up in a way that one or more sensor values recorded from one or more sensors and/or one or more control values are assigned to a state or a property of the die casting or injection molding production machine, or to a state or a property a mechanical component produced by it. The recorded one or more sensor values and/or one or more control values may, for example, be recorded at a certain time, or have been recorded in a certain predetermined period of time.

This assignment of a state, property, or a comparable parameter to certain one or more sensor and/or control values is often referred to as so-called "labeling" of the sensor data or control values with the mentioned state, property, or a comparable parameter. Furthermore, one or more sensor values and/or one or more control values may also be assigned a characteristic, a quality parameter, a feature or a property of a mechanical component which currently is produced by the die casting or injection molding production machine or was produced by this machine.

Furthermore, the supervised learning, for example, can also be trained and set up in such a way that, for example, one or more of the above-mentioned parameters or data are assigned to a time series of sensor values of a certain sensor and/or a time series of a certain control value. In a comparable way, time series of sensor values originating from different sensors and/or time series of values of different control values may also be assigned to one or more of the above-mentioned parameters.

In case the evaluation component comprises a simulation environment according to the present description, the training of a neural network according to the present description can be performed at least including sensor values of one or more soft sensors or virtual sensors, e.g. in accordance with this description.

Such a use of soft sensor or virtual sensor values is carried out analogously to the use of values of real sensors of the die casting or injection molding production machine for training a neural network according to the present description.

After training of a neural network with one or more of the above-mentioned training data, the neural network can then be used in the following way: after providing recorded data from one or more of the sensors or virtual sensors of the die casting or injection molding production machine to the neural network, a state or property of a mechanical component produced by the die casting or injection molding production machine can be derived from the output of the neural network. In this way, also a state or property of the die casting or injection molding production machine, or components thereof, can be derived.

In an advantageous embodiment, the neural network may consist of, or comprise, a so-called "autoencoder" structure. For example, the auto-encoder structure can have an encoding area, a code area coupled thereto, and a decoding area connected to this code area.

A neural network with a so-called auto-encoder structure can be trained using an unsupervised learning method with according sensor and/or control values. Using such trained auto encoder, for example, various states and/or properties can then be identified for the die casting or injection molding production machine, the production process and/or a mechanical component produced. Based on an evaluation of these identified states, states assigned to error cases can then be identified. Even conditions assigned to impending error cases or faults can be detected in this way.

The unsupervised learning can be designed and set up according to the present description.

This makes the handling of abnormalities occurring during a production process or caused by a production process easier, since the method can be designed and set up in a way, that only sensors, which are anyway present in the die casting or injection molding production machine, are used for the above-mentioned method.

The neural network can for example comprise an autoencoder structure, which has been trained using a method of unsupervised learning at least partly with sensor values originating from virtual sensor values according to the present description and/or sensors of the die casting or injection molding production machine or other die casting or injection molding production machines. The autoencoder structure could also have been trained with a method of unsupervised learning at least partly with control values being provided by a control component to any part of the die casting or injection molding production machine or other die casting or injection molding production machines.

An "autoencoder" may, for example, be such a neural network that is trained or trainable to reproduce, or at least approximately reproduce, the data input to the neural network. Training procedures for an autoencoder can be designed and set up in a way that the parameters of the individual nodes and node connections of the autoencoder (e.g. bias, weight and/or transfer functions) are set up in such a way that the input data is reproduced at the output of the auto-encoder, or at least approximately reproduced. This is an example of so-called unsupervised learning. It may be an application or purpose of such autoencoder, to reduce the data characteristic for a certain input data to achieve a more characteristic description or better characterization of such data. Such a dimensional reduction can be achieved, for example, by making the number of nodes within a code region of the autoencoder described above smaller than the number of nodes in an encoding or decoding region of this autoencoder.

The encoding, coding and/or decoding region may comprise one or more layers of nodes. For example, a node layer may be one-dimensional, two-dimensional, or higher-dimensional.

Advantageously, the first of the existing encoding node layers is connected to the inputs of the neural network and the last of the decoding layers is connected to the outputs of the neural network. Further advantageously, the autoencoder can be designed and arranged such that the first of the encoding layers has the same structure as the last of the decoding layers. Further advantageously, the number of encoding layers corresponds to the number of decoding layers. Furthermore, the autoencoder may also have a symmetrical structure, in which case the autoencoder may, for example, be symmetrical with respect to the code node layer and/or the code region. Symmetry can preferably only refer to the arrangement of the individual nodes and their connections, and not to their respective parameters (e.g. bias, weights, transfer functions).

Advantageously, the neural network with the auto-encoder structure is formed and set up as a trained neural network, wherein the neural network in this case may have been trained, for example, least partly, with sensor values originating from virtual sensor values according to the present description, and/or sensors of the die casting or injection molding production machine or other die casting or injection molding production machines, and/or at least partly with control values being provided by a control component to any part of the die casting or injection molding production machine or other die casting or injection molding production machines.

Furthermore, the autoencoder structure may be designed and set up in such a way that a localization in the code area of the neural network is assigned to a set of sensor values and/or control values. Localization in the code area can be understood, for example, to consist of those network nodes, which are activated when the corresponding set of sensor values and/or control values are entered into the neural network. In a preferred embodiment, the sensor values and/or control values assigned to such a localization, are sensor values and/or control values recorded during the production of a single mechanical component. This means that the localization in the code area of the autoencoder structure can be seen as being assigned to this single mechanical component produced.

These determined localizations can then be further analyzed, for example, whereby, for example, neighborhood relationships of the localizations can be interpreted as similarities within the framework of the underlying configuration data.

Furthermore, for example, the localizations in the code area can be examined by means of cluster methods (e.g. using the so-called "K-means clustering" method). In this way, for example, configuration records can be divided into different, characteristic groups. Such groups can, for example, then be assigned to different properties of the according mechanical parts having their locations in the respective groups.

Furthermore, the neural network may comprise a deep learning structure, which has been trained with a method of supervised learning at least partly with sensor values originating from sensors of the die casting or injection molding production machine or other die casting or injection molding production machines and/or virtual sensor values according to the present description. The deep learning structure could for example have been trained with a method of supervised learning at least partly with control values being provided by a control component to any part of the die casting or injection molding production machine or other die casting or injection molding production machines.

The supervised learning method as well as the sensors of the die casting or injection molding production machine, the virtual sensors as well as the control values and the control component can be designed and set up according to the present description.

A neural network with a deep learning architecture is understood to be, for example, a neural network comprising a so called "deep neural network", a "deep belief network" or a "recurrent neural network".

A deep neural network (DNN) can, for example, be designed as a neural network in which the network nodes are arranged in layers (whereby the layers themselves can be one-dimensional, two-dimensional or even higher-dimensional). A deep neural network comprises at least one or two so-called hidden layers, which only include nodes that are not input nodes or output nodes. That means, the hidden layers have no connections to input signals or output signals.

Deep learning is a class of machine learning techniques that exploit many layers of nonlinear information processing for supervised or unsupervised feature extraction and transformation, and pattern analysis and classification.

Furthermore, deep learning can also be understood as a subfield of machine learning based on algorithms for learning multiple levels of representation to model complex relationships between data. For example, features and concepts at a higher level may be defined based on concepts at lower levels. Such a hierarchy of features can then be referred to as a "deep learning architecture", for example.

The AI component can comprise one or more neural networks with a deep learning architecture according to the present description.

ML-model can also comprise a support vector machine, a gradient boosted tree model or a random forest model, which has been set up at least partly with sensor values originating from sensors of the die casting or injection molding production machine and/or virtual sensor values according to to the present description. The support vector machine, the gradient boosted tree model, or the random forest model could for example also have been set up at least partly with control values being provided by a control component to any part of the die casting or injection molding production machine.

The ML-model can be designed and set up for example as described within this description. Especially the support vector machine, the gradient boosted tree model and/or the random forest model can be designed and set up as described within this description and/or as known from the prior art and/or as being familiar to a person skilled in the art of machine learning. The training and/or setup of such ML-model, support vector machine, gradient boosted tree model and/or random forest model also can be designed and set up as for example described within this description and/or as known from the prior art and/or as being familiar to a person skilled in the art of machine learning.

The task named above is also solved by an evaluation component for monitoring a die casting or injection molding production process of a mechanical component with a die casting or injection molding production machine,
wherein the die casting or injection molding production machine is designed and set up for recording sensor values and/or control values of die casting or injection molding production machine. The evaluation component comprises an ML-model which has been set up by means of a machine learning method. Additionally, the evaluation component is designed and set up to evaluate sensor values and/or control values recorded during the die casting or injection molding production process of the mechanical component, whereas the evaluation component and/or the ML-model outputs a warning message if an evaluation of the sensor values and/or the control values by the evaluation component, in particular using the ML model, results in an increased probability for a defect or anomaly of the mechanical component produced.

The evaluation component can, for example, be designed and set up in such a way that only sensor values of sensors are used, which are already present in the die casting or injection molding production machine anyway. Control values can also be obtained, for example, from control devices of the die casting or injection molding production machine, which are usually provided in the die casting or injection molding production machine.

By using an ML-model in the evaluation component, it is easier to adapt the evaluation component to sensors used in the die casting or injection molding production machine, because by accordingly training or setting up such ML model, the special sensor values leading to a disturbance, or an anomaly are directly taken into account. Therefore, using such method makes the handling of abnormalities occurring during a production process or caused by a production process easier.

Furthermore, the recording of the sensor values and/or control values can be performed, designed and/or set up for example as described within this description.

The evaluation component, the injection molding production process, the mechanical component, the die casting production machine, the injection molding production machine, the ML-model, the machine learning method, the sensor values, the control values, the evaluation of the sensor values and/or the control values by the evaluation component and/or the warning message can be performed, designed and/or set up for example as described within this description.

The evaluation component can further be designed and set up for carrying out a method according to the present description.

The task named above is also solved by a die casting or injection molding production machine for producing a mechanical component, wherein the die casting or injection molding production machine is designed and set up for detecting at least one sensor value and/or at least one control value of the die casting or injection molding production machine, whereas the die casting or injection molding production machine comprises an evaluation component according to the present description.

The die casting or injection molding production machine can, for example, be designed and set up in such a way, that only sensor values of sensors are used by the evaluation component, which are already present in the die casting or injection molding production machine anyway. Control values can also be obtained, for example, from control devices of the die casting or injection molding production machine, which are provided as standard in the die casting or injection molding production machine.

By using an ML-model in the evaluation component, it is easier to adapt the evaluation component to sensors used in the die casting or injection molding production machine, because by accordingly training or setting up such ML model, the special sensor values leading to a disturbance, or an anomaly are directly taken into account. Therefore, using such method makes the handling of abnormalities occurring during a production process or caused by a production process easier.

Furthermore, the recording of the sensor values and/or control values can be performed, designed and/or set up for example as described within this description.

The evaluation component, the injection molding production process, the mechanical component, the die casting production machine and/or the injection molding production machine can be performed, designed and/or set up for example as described within this description.

The task named above is also solved by a ML-model designed and set up for a die casting or injection molding production machine according to the present description,
whereas the ML-model has been trained and/or set up at least partly with sensor values originating from virtual sensors of the die casting or injection molding production machine and/or sensors of the die casting or injection molding production machine or other die casting or injection molding production machines. The ML-model could also have been trained at least partly with control values being provided by a control component to any part of the die casting or injection molding production machine or other die casting or injection molding production machines.

Such an ML-model can be used as ML-model in each method for monitoring a die casting or injection molding production process of a mechanical component with a die casting or injection molding production machine according to the present description. Such ML-model can also be used or integrated in any evaluation component according to the present description and/or any die casting or injection molding production machine according to the present description.

The ML-model, the die casting or injection molding production machine, the other die casting or injection molding production machines, the sensor values, the sensors, the virtual sensors, the control values and/or the training and/or set up of the ML-model, can be designed and set up for example as described within this description.

The task named above is also solved by a ML-Model-component designed and set up for a die casting or injection molding production machine according to the present description, whereas the ML-Model-component has been trained and/or set up at least partly with the first selection of sensor values originating from virtual sensors of the die casting or injection molding production machine assigned to the first process element and/or sensors of the die casting or injection molding production machine assigned to the first process element or of sensors assigned to the first process element of other die casting or injection molding production machines, and/or
the ML-Model-component has been trained at least partly with the first selection of control values being provided by a control component to any part of the die casting or injection molding production machine assigned to the first process element or assigned to the first process element of other die casting or injection molding production machines.

Further advantageous embodiments can be found in the dependent claims.

In the following, the present invention is explained in more detail by way of example with reference to the accompanying figures.

They show:
Figure 1: Example of a die casting production machine.
Figure 2: Schematic representation of the die casting production machine according to Figure 1 with an associated control and evaluation component.
Figure 3: Representation of a sensor system of a die casting production machine according to Figure 2 with alternative design of the associated control and evaluation component.
Figure 4: Representation of a sensor system of a die casting production machine according to Figure 2 or 3 with a further alternative design of the associated control and evaluation component.
Figure 5: Exemplary design of a ML model in the form of a neural network with autoencoder structure.
Figure 6: Example for an evaluation sequence.
Figure 7: Example for an evaluation of a time series of data.

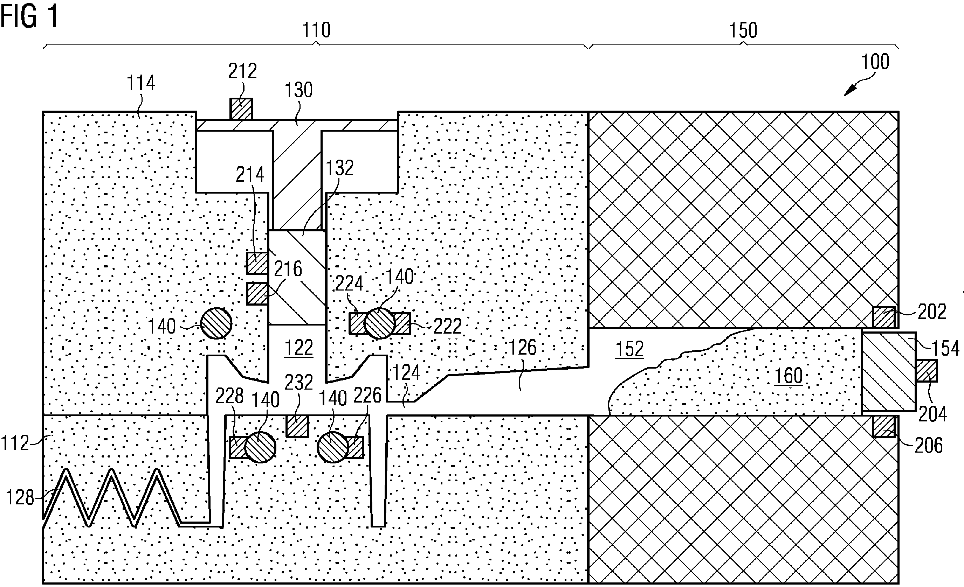

Figure 1 shows a die casting production machine 100 consisting of a die core component 110 and a metal injection component 150. The die casting production machine 100 is an example for a die casting or injection molding production machine according to the present description.

The die core component 110 consists of a casting cavity 122, which has the shape of a mechanical component to be produced with this die. Molten metal, here molten aluminum, 160 is pressed by an injection plunger 154 through a shot chamber 152 of the metal injection component 150 as well as a runner 126 and an injection sleeve 124 of the die core component 110 into the casting cavity 122. The shot chamber 152 and the injection plunger 154 are part of the metal injection component 150 to enable the injection of molten aluminum 160 into the casting cavity 122 of the die core component 110.

After the molten aluminum 160 has been pressed into the casting cavity 122 of the die core component 110, in a next step, a squeeze head 130 of the die core component 110 presses a squeeze rod 132 into the casting cavity 122 to further apply pressure to the metal contained in the casting cavity 122.

To solidify the molten aluminum 160, cooling water pipes 140 are integrated in the die core component 110 to cool the die 110 down, until the aluminum 160 contained in the die core component 110 becomes solid.

The die core component 110 consists of two parts, an upper die part 114 and a lower die part 112. As soon as the molten aluminum in the casting cavity 122 is solid, the upper die part 114 is separated from the lower die part 112 to take the produced mechanical component out of the die core component 110.

To improve the injection of the molten aluminum 160 into the casting cavity 122, an overflow channel 128 is integrated into the lower die part 112 to enable the air present in the casting cavity 122 being pushed out of the casting cavity 122 by the molten aluminum 160 pressed into it.

For controlling the process for producing the mechanical component as described above, several sensors 202, 204, 206, 212, 214, 216, 222, 223, 226, 228, 232 are integrated into the die casting production machine 100. To control the injection process, for example, a plunger velocity sensor 202 and a plunger stroke sensor 206 together with a plunger pressure sensor 204 is built into the metal injection component 150 of the die casting production machine.

To e.g. control the process of completely filling the casting cavity 122 with molten aluminum 160 and solidifying the molten aluminum 160, several sensors 202, 204, 206, 212, 214, 216, 222, 223, 226, 228, 232 are built into the die core component 110. For example, a squeeze head pressure sensor 212 together with a squeeze rod stroke sensor 214 and a squeeze rod pressure sensor 216 cooperating with a molten metal pressure sensor 232 are used to control the filling of the die cavity 122 completely with the molten aluminum 160, e.g. in the form of cavities or bubbles, remaining in the casting cavity 122. To e.g. control the cooling of the molten aluminum 160, an upper part cooling water temperature sensor 224 and an upper part cooling water volume sensor 222 for measuring the properties of the cooling water within the upper part 114 of the die 110 are implemented. Also, in the lower part 112 of the die 110 a lower part cooling water temperature sensor 228 and a lower part cooling water volume sensor 226 to measure the properties of the cooling water within the lower part 112 of the die 110 are integrated.

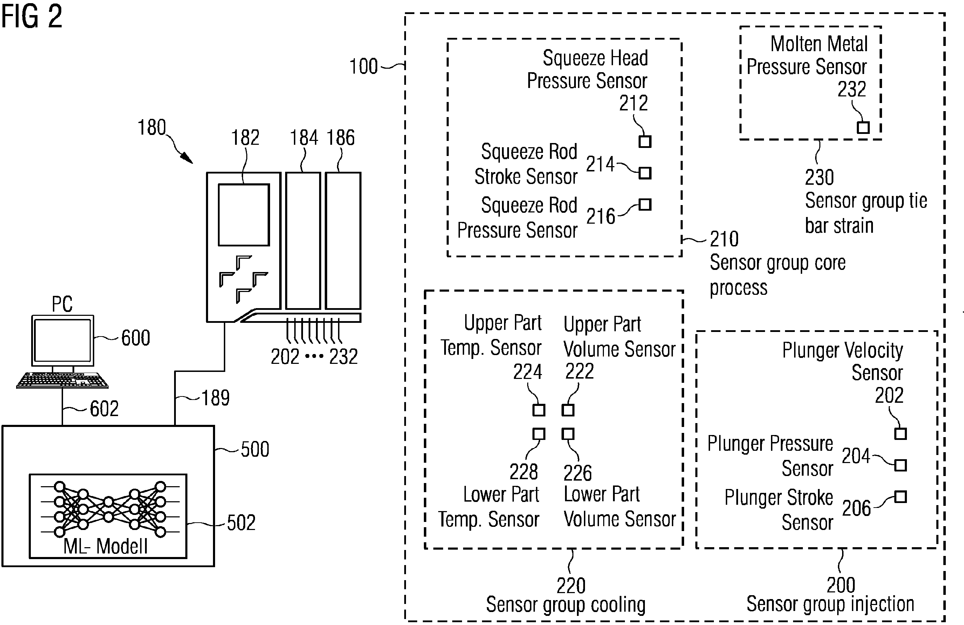

Figure 2 shows a schematic view of the die casting production machine 100, already explained with reference to figure 1, together with a control device 180 for controlling a die casting process for producing a mechanical component with the die casting production machine 100. The only parts of the die casting production machine 100 shown in figure 2 are the different sensors 202, 204, 206, 212, 214, 216, 222, 223, 226, 228, 232 also already explained in relation to figure 1.

The sensors 202, 204, 206, 212, 214, 216, 222, 223, 226, 228, 232 of the die casting production machine 100 are grouped into several groups in figure 2, whereas the different groups 200, 210, 220, 230 can be assigned to different process elements according to the present description.

A first sensor group 200, related to the process element of "injection", comprises the plunger velocity sensor 202, the plunger pressure sensor 204 and the plunger stroke sensor 206.

A second sensor group 210 comprises sensors belonging to the process element of the "core process" according to the present description. Such sensors are the squeeze head pressure sensor 212, the squeeze rod stroke sensor 214 and the squeeze rod pressure sensor 216.

A third sensor group 220 relates to the process element of "cooling" according to the present description and comprises the sensors: upper part temperature sensor 224, upper part volume sensor 222, lower part temperature sensor 228, and lower part volume sensor 226.

A fourth sensor group 230 relates to the process element of "tie bar strain" according to the present description and comprises the molten metal pressure sensor 232.

All those sensors 202, 204, 206, 212, 214, 216, 222, 223, 226, 228, 232 are connected to input-output-modules 184, 186 of the controller 180. The controller 180 is realized as a modular PLC 180, consisting, in addition to the input-output-modules 184, 186, of a core module 182. This core module 182 is designed and set up for e.g. running a control program to control a die casting process for producing a mechanical component with the die casting production machine 100.

Further, actors of the die casting production machine 100, like motors, inverters, switches and comparable parts, are also connected to the input-output-modules 184, 186 of the controller 180 to be controlled by a control program running in the core module 182. Such actors of the die casting production machine 100 are not shown in the figures.

For producing a mechanical component with the die casting production machine 100, an according control program is run in the core module 182 of the controller 180 driving the according actors in the die casting production machine 100 and controlling those actors in accordance with measurement values measured with one or more of the sensors 202, 204, 206, 212, 214, 216, 222, 223, 226, 228, 232 of the die casting production machine 100.

Two further supervise the production process of a mechanical component, measurement values of the sensors 202, 204, 206, 212, 214, 216, 222, 223, 226, 228, 232 of the die casting production machine 100 are transferred via a fieldbus connection 189 to an edge device 500 comprising a neural network 502. The neural network 502 is an example of an ML-model according to the present description.

For training the neural network 502, during past production processes of mechanical parts, sensor data has been collected from the sensors 202, 204, 206, 212, 214, 216, 222, 223, 226, 228, 232 of the die casting production machine 100. The data has been collected and processed in a way, that the sensor data collected during the production process of a specific mechanical component has been assigned to one or more product properties of the mechanical component produced or properties of the die casting production machine 100. Such product properties could comprise for example a quality information, a surface quality information, a porosity information, a mechanical stability information, an air-bubble-size information or comparable information. Properties of the die casting production machine 100 could comprise any information about its state and process parameters. The sensor data can consist of the data of a single sensor, of multiple sensors, of one or more sensors of one of the sensor groups named above or another selection of sensors of the die casting production machine 100. The sensor values further could be taken at one specific time during the production process of the mechanical component or could consist of one or more time series of sensor values taken during the production process of the mechanical component.

The information related to the mechanical component produced (or the die casting production machine 100) is assigned to the according sensor data recorded during its production process. This data can be stored in a database and can be used e.g. to train the neural network 502.

In a first set up, the sensor data related to the production of the mechanical part is used for training the neural network 502 with a method of unsupervised learning. In this set up, the neural network 502 can be for example designed and set up as a so-called autoencoder 502. The data sets used for such unsupervised training are the sensor values recorded during the production process of a specific mechanical component named above. After performing such training steps for many of such sets of sensor data, a clustering algorithm can be used to cluster output data produced by the autoencoder 502 or internal data of the autoencoder 502 (e.g. the information contained in a so called coding layer or region of the autoencoder 502). Using the information about the mechanical components produced (or the die casting production machine) relating to the respective sensor data, different clusters detected by the clustering algorithm can be assigned to different qualities and/or other properties of the mechanical components produced or different states or conditions of the die casting production machine 100. For example, one of the clusters could be assigned to mechanical components produced which are fully in accordance with the quality requirements needed. Another cluster could be related to mechanical components which are not in accordance with the needed specifications. There could be, for example, different clusters for different defect types of the mechanical components produced. This could further allow an easier detection of the reasons for the according defects.

The information about the clusters can be used later to recognize data newly entered in such a trained neural network 502, which is e.g. related to a defect mechanical component produced. The data measured during the production process of a specific mechanical component can then be fed into the autoencoder 502 and it can be observed, which of the clusters identified fits to this data.

If it turns out, that the relevant cluster is one being characteristic for a defect mechanical component, a warning message is output via a PC 600 connected to the edge device 500. The communication between the edge device 500 and the PC 600 is performed via an OPC-UA-communication-link 602. This warning message could for example consist of an information to a user of the die casting production machine 100 informing him about possible defects related to the mechanical components currently produced. In addition, the warning message could additionally consist of a sound signal alarming the user.

In an alternative set up, the training data as explained above could also be used for training a neural network 502 with a method of supervised learning. In this case, the output of the neural network could then be directly related to an information, whether the mechanical component produced is okay or defect, after sensor data recorded during the production of this mechanical component has been entered.

If the output of such neural network 502 relates to a possible defect in the mechanical component produced, again are warning message according to the present description is output by the data connection 602 and the PC 600.

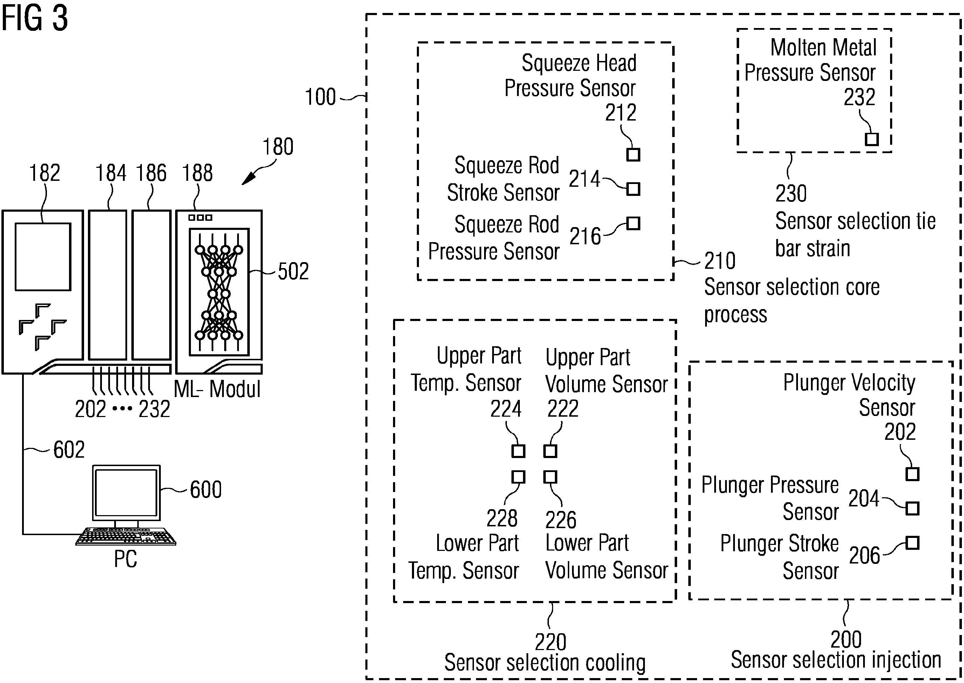

Figure 3 shows an alternative set up of the system shown in figure 2 in relation to the control of the die casting production machine 100 and the evaluation of the sensor signals.

The sensors 202, 204, 206, 212, 214, 216, 222, 223, 226, 228, 232 belonging to the die casting production machine 100 shown in figure 3 and their grouping into different groups assigned to different process elements respectively, correspond to those shown already in figure 2.

In figure 3, instead of the edge device 500 shown in figure 2, the controller 180 contains an additional ML-module containing the neural network 502. This ML-module 188 is connected via a backplane bus (not shown in figure 3) to the other modules 182, 184, 186 of the controller 180. In this embodiment, the ML-module 188 is an example for an evaluation component according to the present description.

It is a difference of the system shown in figure 3 compared to that one shown in figure 2, that the sensor data is in the system shown in figure 3 transferred to the neural network 502 via the backplane bus of the controller 180 and that the according evaluation and handling of the data is done in the ML-module 188 and not in the edge device 500.

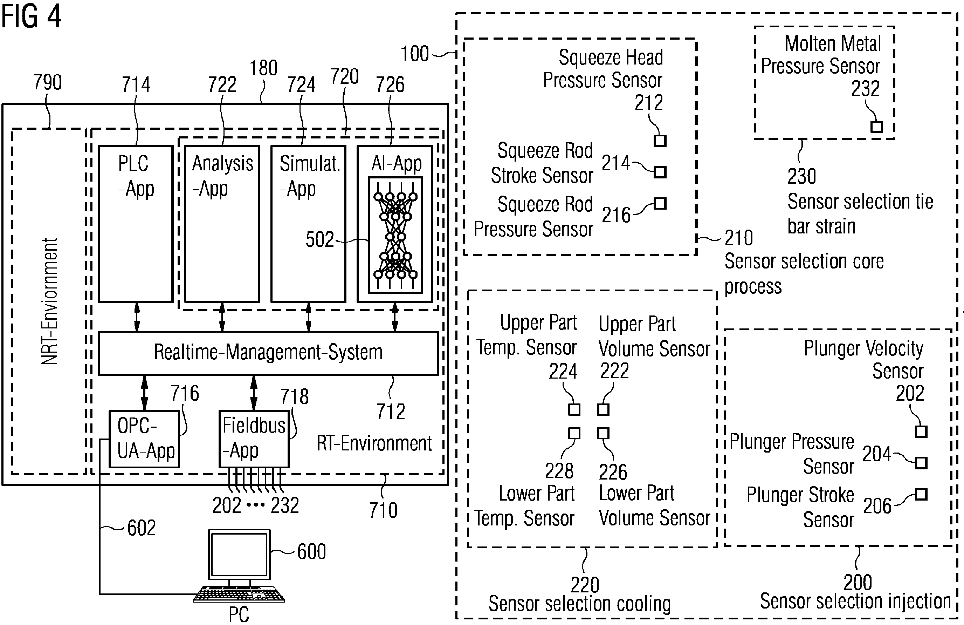

Figure 4 shows another alternative setup of the controller 180 being part of the system shown in figures 2 and 3. The sensors 202, 204, 206, 212, 214, 216, 222, 223, 226, 228, 232 belonging to the die casting production machine 100 shown in figure 4 and their grouping into different groups assigned to different process elements respectively, correspond to those shown already in figure 2 and 3.

In figure 4, the controller 180 is set up as an industrial PC (IPC) comprising a real-time environment 710 and a non-real-time environment 790. The real-time environment 710 contains a PLC-application 714, being a software application for realizing the functionality of a programmable logic controller (PLC), as well as a real-time-management-system 712 for managing the real-time environment 710. Such management of the real-time environment 710 comprises for example the real-time execution of software implemented within the real-time-environment 710. Such software is for example the PLC-application 714 as well as the software realizing a real-time communication e.g. between different applications within the real-time environment 710.

The real-time environment 710 further comprises an OPC-UA-application 716 for performing a communication via the OPC-UA-standard with the PC 600 via the OPC-UA-connection 602. The real-time environment 710 further comprises a fieldbus application 718 to perform fieldbus communication with the sensors 202, 204, 206, 212, 214, 216, 222, 223, 226, 228, 232 and actors of the die casting production machine 100.

Additionally, the real-time environment 710 of the IPC-controller 180 additionally contains an analysis application 722 for performing data analysis of all kinds of data e.g. being provided to this application by other applications of the real-time environment 710 via the real-time-management-system 712. Further the real-time environment 710 also comprises a simulation application 724 for performing simulations of all kinds of technical systems, for example by running according simulation programs with in the simulation application 724. The real-time environment 710 also comprises a machine learning application 726 comprising the ML-model 502 and the according handling and management functionality. The analysis application 722, the simulation application 724 and the machine learning application 726 can be seen as an evaluation app cluster 720, which is an example for an evaluation component according to the present description.

The system shown in figure 4 could have been set up in a way, that the ML-model 502 is implemented within the machine learning application 726 in the IPC controller 180 after having been trained with data and a method according to the present description.

During the manufacturing of a specific mechanical component within the die casting production machine 100, according sensor data by at least part of the sensors 202, 204, 206, 212, 214, 216, 222, 223, 226, 228, 232 shown in figure 4 is recorded by transferring them via the fieldbus connections between the sensors 202, 204, 206, 212, 214, 216, 222, 223, 226, 228, 232 and the fieldbus application 718 into the IPC controller 180. This data is then provided by the real-time management system 712 to the analysis application 722 for further processing of this sensor raw data transmitted to the IPC controller 180. Then this data is provided by the analysis application 722 via the real-time management system 712 to the machine learning application 726. The machine learning application 26 feeds this data into the ML-model 502 and returns the output from the ML model 502 back via the real-time management system 712 to the analysis application 722. The returned data is now processed by the analysis application 722. In case the result of this analysis is, that the mechanical component produced might contain defects or other quality problems, a warning message is triggered and set up by the analysis application 722. This warning message is then sent via the OPC-UA-application 716 and the OPC-UA-connection 602 to the PC 600, where it is brought to the attention of a user.

In an alternative method according to the present description, at least partly data of so-called soft sensors or virtual sensors are used in addition to, or at least partly instead of, the sensor data of the real sensors 202, 204, 206, 212, 214, 216, 222, 223, 226, 228, 232 of the die casting production machine 100. This soft sensor data or virtual sensor data is generated by running an according simulation software within the simulation application 724 in the real-time environment 710 of the IPC controller 180. The simulation software running within the simulation application 724 is designed and set up to simulate the die casting production machine 100 or parts thereof. During such simulation one or more so-called soft sensors or virtual sensors created virtually for the die casting production machine, or the respective part, are simulated. During this simulation the according virtual sensor or soft sensor output data is generated. The simulation is e.g. run in parallel to the real processes running in the die casting production machine 100. This synchronization is done using methods known by persons skilled in the art of simulating technical processes.

Such soft sensor data or virtual sensor data can be used in addition to the data provided by the real sensors 202, 204, 206, 212, 214, 216, 222, 223, 226, 228, 232 of the die casting production machine 100 as previously described. Soft sensor data or virtual sensor data can also partly or totally replace data of real sensors 202, 204, 206, 212, 214, 216, 222, 223, 226, 228, 232 of the die casting production machine 100.

The process for supervising the production of a specific mechanical component, and/or deciding whether to output a warning message or not, can now be performed with such sensor data. In case soft sensor data is used at least partly, the analysis application 722 will collect the data provided by the real sensors 202, 204, 206, 212, 214, 216, 222, 223, 226, 228, 232 of the die casting production machine 100 via the field bus application 718 as well as the data created by the soft sensors within the simulation application 724. The analysis application 722 then chooses from this data the sensor data to be transmitted to the ML-application. The following processes comprising the usage of the ML model 502 and the decision about outputting a warning message and the final eventual output of this warning message is then performed as already described above.

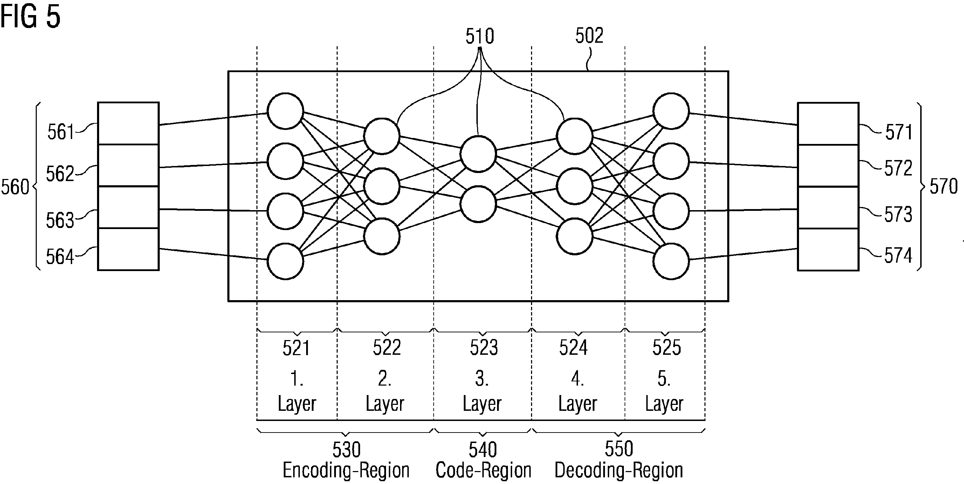

Figure 5 shows an example for an embodiment of the neural network 502 shown in Figures 2, 3 and 4. The neural network 502 shown in Figure 5 has a so-called auto-encoder structure and is hereinafter also called auto-encoder 502. To simplify the representation of the structure of the auto-encoder 502, comparatively few nodes are drawn and a two-dimensional neural network 502 was chosen as an example for display reasons.

Such a neural network 502 with an auto-encoder structure provides an example for an ML model according to the present description. It may be trained, for example, with methods of known unsupervised learning methods, e.g. according the present description, e.g. using training data according to the present description.

The auto-encoder 502 has so-called nodes 510, which in the illustrated example are arranged in five node layers 521, 522, 523, 524, 525. In Figure 5, only some of the nodes 510 are marked with a reference sign to simplify the display and make it clearer. In Figure 5 on the left, an input data vector 560 (a vector is a one-dimensional matrix) with four data fields 561, 562, 563, 564 is shown, wherein each of the input fields 561, 562, 563, 564 is connected to one of the nodes 510 of the first node layer 521 of the auto encoder 500 respectively. In this way, data is entered into the auto encoder 502. The auto encoder 502 comprises a so-called encoding region 530 which comprises the first two node layers 521, 522 of the auto-encoder 502. Each of the nodes 510 of the first node layer 521 is connected to each of the nodes 510 of the second node layer 522.

Connected to the encoding range 530 there is a code region 540, which consists of one node layer 523. In turn, each node 510 of the second layer 522 of the encoding region 530 is connected to each node of the layer 523 of the code region 540.

In addition to the code region 540, the auto-encoder structure 502 has a decoding region 550, which consists of two node layers 524, 525. The last of the node layers 525 is again connected to data fields 571, 572, 573, 574 of an output data vector 570.

The training of the auto encoder 502 can be carried out, for example, in such a way that an input data set 560, e.g. consisting of sensor values from sensors 202, 204, 206, 212, 214, 216, 222, 223, 226, 228, 232 of the die casting production machine 100, is entered into the first node layer 521 of the encoding range 530. Then a learning method for such autoencoders according to the prior art is used to adjust the parameters of nodes 510 and node connections of the autoencoder 502 in a way, that the output data vector 570, which is output from the last node layer 525 of the decoding range 550, corresponds to the input data vector 560, or at least approximates the input data vector 560. Such learning methods for autoencoders according to the prior art are, for example, the so-called "backwards propagation of errors" ("back propagation") method, conjugate gradient methods, a so-called "restricted Bolzman Machine" mechanism or comparable mechanisms or combinations thereof. Parameters of a neural network determined during training may be, for example, a weight of a node connection or an input value for a node ("weight"), a preload value for a node ("bias"), an activation function for a network node or parameters of such an activation function (e.B. "Sigmoid Function", "Logistic Function", "Activation Function"...) and/or an activation threshold for a network node ("Threshold") or comparable parameters.

The learning methodology described above for the autoencoder 502 shown in Figure 5 is an example of so-called "unsupervised learning".

A neural network 502 according to the present description could e.g. also include a network structure for supervised learning. For example, network structures for supervised learning and unsupervised learning can be combined.

The auto encoder structure shown in Figure 5 is an example for a so-called deep auto encoder 502, since not all of the nodes 510 of the auto encoder 502 are connected to an input or output of the auto encoder structure 502 and there are thus so-called "hidden layers".

In general, auto-encoder structures 502 can be symmetrically structured to the code area. Furthermore, for example, the number of nodes 510 per node layer 521, 522, 523, 524, 525 from the input side to the code area can decrease layer by layer and then increase again layer by layer to the output side. In this way, layer 523 or layers in the code area have a minimum number of nodes 510 within the autoencoder structure 502. The auto-encoder 502 shown in Figure 5 is an example of such a symmetrical auto-encoder 502 described above.

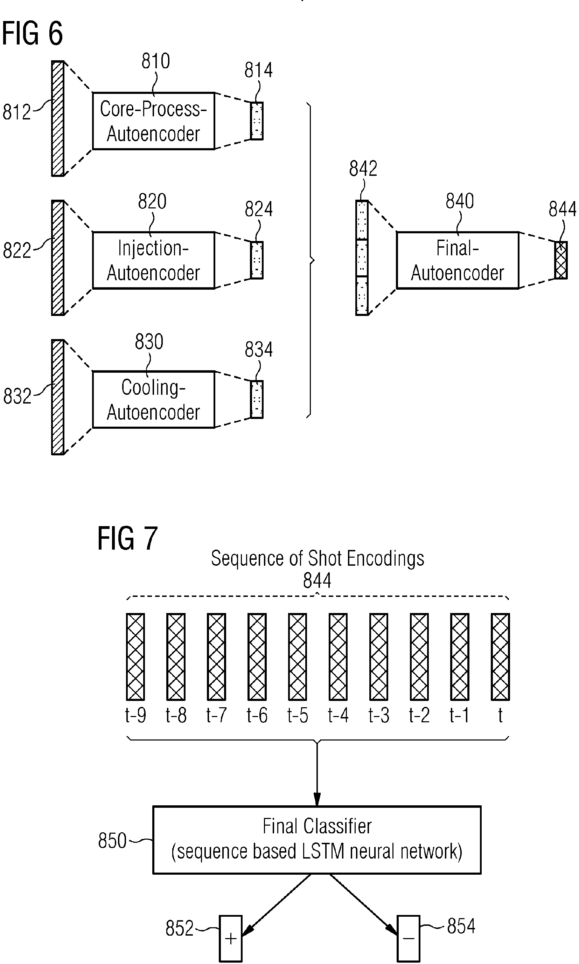

Figures 6 and 7 show an example for a set up and usage of the ML model 502 as described in relation to the previous figures as well as in the present description. In the set up shown in figure 6, the ML model 502 consists of four autoencoders 810, 820, 830, 840. Three of these autoencoders 810, 820, 830 are used for receiving input data 812, 822, 832 originating from sensors 200, 202, 204, 210, 212, 214, 220, 222, 224, 226, 230 belonging to different process elements according to the present description. Such sensors 202, 204, 206, 212, 214, 216, 222, 223, 226, 228, 232 for according process elements are for example described in relation to figures 2 to 4. In a second processing steps, the results produced by those "process element autoencoders" 810, 820, 830 are then used as an input for the fourth "final autoencoder" 840 to generate a final result 844, which is later on used as a starting basis for a decision whether to output a warning message according to the present description or not. The process for this final decision is explained in more detail related to figure 7.

The process described above is now explained in more detail. As input data 812, 822, 832 for the three "process element autoencoders" 810, 820, 830 sensor data related to the process element "core process" is arranged as a so-called input vector which is then used as input data 812 for the according "core process autoencoder" 810. The result 814 produced by the "core process autoencoder" 810 is then stored for later use. This result can be for example be the output or content of a so-called code layer or code region of the core process autoencoder 810 as for example described in general related to figure 5.

In the same way, data provided by sensors related to the "injection" process element are arranged to an according input vector 822 for the "injection autoencoder" 820, which then produces an according output data 824. Additionally, sensor data assigned to the "cooling" process element is arranged into an according input vector 832 for an according "cooling autoencoder" 830, which then produces according cooling output data 834.

The output data 814, 824, 834 of these three process-element-autoencoders 810, 820, 830 is now arranged as a new concatenated final input vector 842. This final input vector 842 is then used as input for the final autoencoder 840 which produces final encoding data 844 as a final result of the ML model 502. This final result 844 of the ML model 502 is then used as a basis for a decision process according to the present description about whether to output a warning message according to the present description or not.

Figure 7 shows an example for a further processing of a final result 844 of the final autoencoder 840 as described in relation to figure 6.

In the example shown in figure 7, the decision, whether to output a warning message or not regarding a mechanical component produced at a time T is not only based on sensor data collected during the production of this mechanical component at time t, but also on sensor data collected during the previous production of mechanical components.

Figure 7 shows an example, where the result 844 of the final autoencoder 840 is used together with results 844 previously generated by the final autoencoder 840 during production of nine mechanical components previously produced. This data is fed into a final classifier 850. The decision, whether to output a warning message 852 or not 854 after the production of the mechanical component at time t is then based upon this result of the final classifier 850.

The final classifier 850 is an example for a post-processing-ML-Modell according to the present description.

The final classifier 850 can for example be designed and set up as a so-called long-short-term-memory (LSTM) neural network. A long-short-term-memory (LSTM) neural network is in general an artificial recurrent neural network (RNN) architecture used in the field of deep learning. Unlike standard feedforward neural networks, LSTM neural networks have feedback connections. They can process not only single data points (such as images), but also entire sequences of data (such as time series date, speech or video). For example, LSTM neural networks are applicable to tasks such as handwriting recognition, speech recognition and anomaly detection. LSTM neural networks are especially well-suited to classifying, processing and making predictions based on time series data. LSTMs were developed to deal with the vanishing gradient problem that can be encountered when training traditional RNNs.

The final classifier 850 can also comprise as a Boosted Tree Model or a Gradient Boosted Tree Model. The final classifier 850 can also be designed and set up as a Boosted Tree Model or a Gradient Boosted Tree Model. For example, so called "Extreme Gradient Boosting" can be used within the final classifier 850. This can e.g. be realized by using the so called "XGBoost" distributed gradient boosting software library.

## Claims

1. Method for monitoring a die casting or injection molding production process of a mechanical component with a die casting or injection molding production machine (100),
• wherein the die casting or injection molding process comprises a first process element taken from the following group of process elements: cooling, core-process, injection, lubrication, electric power, and tie-bar strain,
• wherein sensor values and/or control values of the die casting or injection molding production machine (100) are recorded during the die casting or injection molding production process of the mechanical component,
• wherein the recorded sensor values comprise a first selection of sensor values being assigned to the first process element and/or the control values comprise a first selection of control values being assigned to the first process element,
• and wherein the sensor values and/or the control values are evaluated by an evaluation component (188, 500, 720),
**characterized in,**
• **that** the evaluation component (188, 500, 720) comprises an ML-model (502) set up by means of a machine learning method, and
• **that** the evaluation component (188, 500, 720), and/or the ML-model (502), outputs a warning message, if an evaluation of the sensor values and/or the control values by the evaluation component (188, 500, 720) results in an increased probability for a defect or anomaly of the mechanical component produced or the die casting or the injection molding production machine,
• **that** the ML-Model (502) comprises a first ML-Model-component (810, 820, 830),
• and **that** the evaluation of the sensor values and/or the control values by the evaluation component (188, 500, 720) comprises a first evaluation step for creating a first evaluation result using the first ML-Model-component (810, 820, 830), whereas the first evaluation result is based on the first selection of sensor values and/or the first selection of control values.

2. Method according to claim 1,
**characterized in,**
• **that** the die casting or injection molding process comprises a second process element taken from the following group of process elements: cooling, core-process, injection, lubrication, electric power, and tie-bar strain,
• **that** the ML-Model (502) comprises a second ML-Model-component (810, 820, 830) and a final-ML-model-component (840),
• **that** the sensor values comprise a second selection of sensor values being assigned to the second process element and/or the control values comprise a second selection of control values being assigned to the second process element,
• **that** the evaluation of the sensor values and/or the control values by the evaluation component (188, 500, 720) comprises a second evaluation step for creating a second evaluation result using the second ML-Model-component (810, 820, 830), whereas the second evaluation result is based on the second selection of sensor values and/or the second selection of control values, and
• **that** that the evaluation of the sensor values and/or the control values by the evaluation component (188, 500, 720) comprise a final evaluation step for creating a final evaluation result using the final-ML-Model-component (840), whereas the final evaluation result is based on the first evaluation result and/or the second evaluation result.

3. Method according to any of the preceding claims, **characterized in,**
**that** the evaluation component (188, 500, 720) comprises a simulation environment (724) designed and set up for running a simulation program for the simulation of the die casting or injection molding production machine (100), or for the simulation of parts or components of the die casting or injection molding production machine (100),
in particular, that the evaluation component (188, 500, 720) comprises a simulation environment (724) comprising a simulation program for simulating the die casting or injection molding production machine (100), or for simulating parts or components of the die casting or injection molding production machine (100).

4. Method according to claim 3,
**characterized in,**
**that** by running the simulation program, at least one virtual sensor related to the die casting or injection molding production machine (100), or parts or components thereof, is simulated, and
**that** the recording of the sensor values of the die casting or injection molding production machine (100) comprises also the recording of virtual sensor values related to the at least one virtual sensor.

5. Method according to any of the preceding claims, **characterized in,**
**that** all sensor values of the at least one sensor value originate from sensors (202, 204, 206, 212, 214, 216, 222, 223, 226, 228, 232) of the die casting or injection molding production machine (100), or parts or components thereof, which are required or are used for a production process of the mechanical component by the die casting or injection molding production machine (100).

6. Method according to any of the preceding claims, **characterized in,**
**that** the die casting or injection molding production machine (100) comprises a control device (180) for controlling a production process of a part or component by the die casting or injection molding production machine (100), and
**that** the control values being recorded during the die casting or injection molding production process of the mechanical component, are control values which are used for a production process, or a planned production process, of the mechanical component by the die casting or injection molding production machine (100).

7. Method according to any of the preceding claims, **characterized in,**
**that** the ML-model (502) and/or the first ML-Model-component (810, 820, 830) have been trained and/or set up at least partly with sensor values originating from virtual sensors according to claim 5 and/or sensors (202, 204, 206, 212, 214, 216, 222, 223, 226, 228, 232) of the die casting or injection molding production machine (100) or other die casting or injection molding production machines,
and/or
**that** ML-model (502) and/or the first ML-Model-component (810, 820, 830) have been trained at least partly with control values being provided by a control component to any part of the die casting or injection molding production machine (100) or other die casting or injection molding production machines.

8. Method according to any of the preceding claims, **characterized in,**
**that** the ML-model (502) and/or the first ML-Model-component (810, 820, 830) comprises a neural network (502), which has been trained at least partly with sensor values originating from virtual sensors according to claim 5 and/or sensors (202, 204, 206, 212, 214, 216, 222, 223, 226, 228, 232) of the die casting or injection molding production machine (100) or other die casting or injection molding production machines,
and/or
**that** the neural network (502) has been trained at least partly with control values being provided by a control component to any part of the die casting or injection molding production machine (100) or other die casting or injection molding production machines.

9. Method according to claim 8,
**characterized in,**
**that** the neural network (502) comprises an autoencoder structure (502), which has been trained with a method of unsupervised learning at least partly with sensor values originating from virtual sensors to claim 5 and/or sensors (202, 204, 206, 212, 214, 216, 222, 223, 226, 228, 232) of the die casting or injection molding production machine (100) or other die casting or injection molding production machines,
and/or
**that** the autoencoder structure (502) has been trained with a method of unsupervised learning at least partly with control values being provided by a control component to any part of the die casting or injection molding production machine (100) or other die casting or injection molding production machines.

10. Method according to any of the preceding claims, **characterized in,**
**that** the ML-model (502) and/or the first ML-Model-component (810, 820, 830) comprises a support vector machine, a gradient boosted tree model or a random forest model, which has been set up at least partly with sensor values originating from sensors (202, 204, 206, 212, 214, 216, 222, 223, 226, 228, 232) of the die casting or injection molding production machine (100) or other die casting or injection molding production machines and/or virtual sensor values according to claim 5,
and/or
**that** the support vector machine, the gradient boosted tree model, or the random forest model has been set up at least partly with control values being provided by a control component to any part of the die casting or injection molding production machine (100) or other die casting or injection molding production machines.

11. Evaluation component (188, 500, 720) for monitoring a die casting or injection molding production process of a mechanical component with a die casting or injection molding production machine (100),
• wherein the die casting or injection molding process comprises a first process element taken from the following group of process elements: cooling, core-process, injection, lubrication, electric power, and tie-bar strain,
• wherein the die casting or injection molding production machine (100) is designed and set up for recording sensor values and/or control values of die casting or injection molding production machine (100),
• and wherein the recorded sensor values comprise a first selection of sensor values being assigned to the first process element and/or the control values comprise a first selection of control values being assigned to the first process element,
**characterized in,**
• **that** the evaluation component (188, 500, 720) comprises a ML-model (502) which has been set up by means of a machine learning method,
• **that** the evaluation component (188, 500, 720) is designed and set up to evaluate sensor values and/or control values recorded during the die casting or injection molding production process of the mechanical component,
• and **that** that the evaluation component (188, 500, 720) and/or the ML-model (502) outputs a warning message, if an evaluation of the sensor values and/or the control values by the evaluation component (188, 500, 720), in particular using the ML model (502), results in an increased probability for a defect or anomaly of the mechanical component produced or the die casting or injection molding production machine,
• **that** the ML-Model (502) comprises a first ML-Model-component (810, 820, 830),
• and **that** the evaluation component (188, 500, 720) is designed and set up in a way, that the evaluation of the sensor values and/or the control values by the evaluation component (188, 500, 720) comprise a first evaluation step for creating a first evaluation result using the first ML-Model-component (810, 820, 830), whereas the first evaluation result is based on the first selection of sensor values and/or the first selection of control values.

12. Evaluation component according to claim 11, **characterized in,**
**that** the evaluation component (188, 500, 720) is designed and set up for carrying out a method according to any one of claims 1 to 10.

13. Die casting or injection molding production machine (100) for producing a mechanical component,
wherein the die casting or injection molding production machine (100) is designed and set up for detecting at least one sensor value and / or at least one control value of the die casting or injection molding production machine (100), **characterized in,**
**that** the die casting or injection molding production machine (100) comprises an evaluation component (188, 500, 720) according to claim 11 or 12.

14. ML-model designed and set up for a die casting or injection molding production machine according to claim 13, **characterized in,**
**that** the ML-model (502) has been trained and/or set up at least partly with sensor values originating from virtual sensors of the die casting or injection molding production machine and/or sensors (202, 204, 206, 212, 214, 216, 222, 223, 226, 228, 232) of the die casting or injection molding production machine (100) or another die casting or injection molding production machine,
and/or
**that** the ML-model (502) has been trained at least partly with control values being provided by a control component to any part of the die casting or injection molding production machine (100) or other die casting or injection molding production machines.

15. ML-Model-component designed and set up for a die casting or injection molding production machine according to claim 13,
**characterized in,**
**that** the ML-Model-component (810, 820, 830) has been trained and/or set up at least partly with the first selection of sensor values originating from virtual sensors of the die casting or injection molding production machine assigned to the first process element and/or sensors (202, 204, 206, 212, 214, 216, 222, 223, 226, 228, 232) of the die casting or injection molding production machine (100) assigned to the first process element or of sensors assigned to the first process element of other die casting or injection molding production machines,
and/or
**that** the ML-Model-component (810, 820, 830) has been trained at least partly with the first selection of control values being provided by a control component to any part of the die casting or injection molding production machine (100) assigned to the first process element or assigned to the first process element of other die casting or injection molding production machines.
